# EUROPÄISCHE PATENTSCHRIFT

(11) **EP 1 698 260 B1**
(45) Veröffentlichungstag und Bekanntmachung des Hinweises auf die Patenterteilung: **13.08.2008**
(21) Anmeldenummer: 06003535.9
(22) Anmeldetag: 22.02.2006
(51) Int. Cl.: A47G 21/14

(54) **Vorrichtung zum Halten von Besteck am Rand von Geschirrgefässen**
Device for attaching a piece of cutlery to the rim of a container
Dispositif permettant d'accrocher un element couvert sur le bord d'un contenant

(30) Priorität: 04.03.2005 DE 202005003703 U
(43) Veröffentlichungstag der Anmeldung: 06.09.2006
(73) Patentinhaber: Hauck, Wolfgang, 95445 Bayreuth (DE)
(72) Erfinder: Hauck, Wolfgang, 95445 Bayreuth (DE)
(74) Vertreter: Küchler, Stefan

(56) Entgegenhaltungen:
- CH-A- 201 910
- CH-A- 212 328
- CH-A- 263 915
- CH-A- 365 837
- DE-U- 29 616 648
- GB-A- 446 062
- US-A- 1 357 233
- US-A- 1 472 995
- US-A- 3 931 668
- US-A- 5 518 211

## Beschreibung

Die Erfindung richtet sich auf eine Vorrichtung zum Halten von Besteck wie bspw. Schöpflöffel, Fleischgabeln, Tranchiermesser, Spaghettizangen, etc., am Rand von Geschirrgefäßen wie bspw. Töpfen, Schüsseln, Schalen, Saucieren, Gläsern, etc., umfassend eine den Rand des Gefäßes mit zwei Backen umgreifende Klammer, deren beide Schenkel am rückwärtigen Ende ihrer Backen über ein elastisches Element miteinander verbunden sind und jenseits des elastischen Elements nach Art von doppelarmigen Hebeln getrennt voneinander verlängert sind, und wenigstens eine schlitzförmige Ausnehmung zum Einlegen des Stiels oder Schaftes eines Besteckteils, die in dem rückwärtigen Hebelarm eines Klammerschenkels angeordnet ist.

Im privaten Bereich, aber gerade auch bei familiären oder öffentlichen Festtafeln sowie bei Buffets ist es üblich, Braten, Soßen und Beilagen für alle Speisegäste gemeinsam in der Mitte der Tafel oder auf dem Buffet mittels Töpfen, Schüsseln, Schalen, etc. für alle gemeinsam bereitzuhalten, wovon sich dann die Tafelgäste selbst bedienen können. Das dafür benötigte Besteck - Schöpflöffel, Fleischgabeln, Tranchiermesser, etc. - wird zur Verfügung gestellt und während unbenutzter Phasen in dem betreffenden Gefäß von innen stehend an die Gefäßwand gelehnt. Leider passiert es dabei nur allzu oft, dass das Besteck dort nicht stehen bleibt, sondern entweder seitlich entlang des Randes wegrutscht oder auf dem Boden des betreffenden Gefäßes nach innen rutscht und dann bspw. in der Soße, im Gemüsetopf od. dgl. landet. Solches ist - gerade an festlich gedeckten Tafeln - in höchstem Grade unästhetisch, vor allem wenn dann eine Person mit anderem Besteck oder gar mit den Fingern versuchen muß, den in der Soße "untergetauchten" Löffel od. dgl. wieder herauszufischen.

In der CH 365837 ist zwar ein klammerförmiger Besteckhalter zum Festklemmen am Rand von Geschirr offenbart; auch sind zwei Einschnitte zum Einlegen von Besteckteilen vorgesehen. Diese Einschnitte befinden sich jedoch an einem Querbalken, dessen in Längsrichtung laufende Symmetrieebene von den Klammerschenkeln etwa lotrecht durchsetzt wird. Die Längsachse dieser Einschnitte verläuft innerhalb dieser Ebene. Dadurch erstrecken sich die Einschnitte beim Festklemmen an einem Tellerrand etwa in vertikaler Richtung von oben nach unten, so dass ein Besteckteil bequem eingelegt werden kann; beim Anklemmen an einem Topfrand dagegen erstrecken sich die Schlitze etwa in horizontaler Richtung, und die gehaltenen Bestecke hängen etwa vertikal herab. Dies mag bei einem Eßlöffel noch funktionieren, weil dieser einen relativ kurzen Stiel aufweist, der sich zu seinem rückwärtigen Ende hin verbreitert. Ein solcher Löffel rutscht innerhalb des Einschnittes herab, bis sein rückwärtiger, verbreiterter Griff sich in dem Einschnitt festklemmt; wenn der Einschnitt eine hinterschnittene Geometrie hat, so erfährt ein solcher Eßlöffel zwar einen ausreichenden Halt in dem betreffenden Einschnitt. Ein solcher Löffel übt auf die Klammer jedoch ein Drehmoment aus, weil die beiden Einschnitte stark exzentrisch an dem Querbalken angeordnet sind, was zu einem unkontrollierten Ver- oder gar Abrutschen der Klammer an dem Topfrand führen kann.

Die Dokumente CH 201 910, CH 212 328, CH 263 915, US 1,472,995, US 3,931,668 sowie US 5,518,211 betreffen zwar auch Vorrichtungen zum Halten von Besteckteilen an einem Geschirrgefäß; diese sind jedoch nicht nach Art einer Klammer mit rückwärtig verlängerten Klammerschenkeln und darin eingeformten Einlegeschlitzen ausgebildet.

Die GB 446,062 betrifft zwar eine Vorrichtung zum Halten von Besteckteilen an einem Geschirrgefäß in Form einer Klammer mit rückwärtig verlängerten Klammerschenkeln und Einlegeschlitzen darin; jedoch sind die beiden Schenkel dieser Klammer unterschiedlich lang; es ist daher nicht möglich, eine solche Klammer zu anderen Zwecken zu verwenden, bspw. zum aufrechten Halten einer Speisekarte.

Eine aus DE 296 16 648 U1 vorbekannte Klammer dient dem Aufhängen von Strümpfen an einer Wäscheleine, nicht jedoch als Besteckhalter. Dabei sind an der Innenseite eines Klammerschenkels Nadeln angeordnet, welche Öffnungen in dem anderen Klammerschenkel durchdringen und dem Aufspießen eines Strumpfs dienen sollen; aufgrund dieser Nadeln könnte eine solche Klammer niemals an einem Topfrand befestigt werden.

Eine aus US 1,657,233 vorbekannte Wäscheklammer ist ebenfalls nicht als Besteckhalter konzipiert. Es handelt sich um eine lange, schlanke Holzklammer mit Schlitzen in beiden rückwärtigen Enden. Diese Klammer würde bereits aufgrund ihrer mangelnden Ästhetik niemals als Besteckhalter auf einem Eßtisch benutzt werden, geschweige denn als Halter für Tisch- oder Speisekarten, und erst recht nicht als Messerbänkchen. Ohnehin wäre es technisch überhaupt nicht vorstellbar, wie ein Messer darauf anders abgelegt werden sollte als quer zur Klammerlängsrichtung; solches hätte jedoch eine sofortige Verschmutzung der Klammer zur Folge und müßte daher als extrem unhygienisch angesehen werden, insbesondere auch deshalb, weil sich Bakterien aus der Holzmaserung nachträglich kaum mehr entfernen ließen.

Aus den Nachteilen des beschriebenen Standes der Technik resultiert das die Erfindung initiierende Problem, wie verhindert werden kann, dass an festlichen Tafeln, Buffets od. dgl., mit in Töpfen, Schalen, Schüsseln oder sonstigen Gefäßen für die Allgemeinheit bereitgestellten Lebensmitteln die zum Entnehmen der Speisen dienenden Besteckteile bei deren vorübergehendem Abstellen bzw. Anlehnen am Rand eines Lebensmittelgefäßes abrutschen können. Dabei soll die für einen solchen Zweck konzipierte Vorrichtung an den unterschiedlichsten Geschirrgefäßen verwendbar sein, unabhängig von deren Material, Höhe, Form des Öffnungsrandes, und insbesondere von dessen Querschnittsform und Krümmungsradius. Weiterhin soll eine solche Vorrichtung auch in der Lage sein, andere Funktionen zu übernehmen wie bspw. das aufrechte Halten von Tisch- oder Speisekarten, sowie das hygienische Aufnehmen von abgelegten Besteckteilen, bspw. Messern.

Die Lösung dieses Problems gelingt dadurch, dass die beiden Klammerschenkel symmetrisch zueinander sind, derart, dass die Vorrichtung wahlweise auch als Messerbänkchen, Tischkartenhalter und/oder Speisekartenhalter verwendbar ist, sich jedoch dadurch unterscheiden, dass nur ein Klammerschenkel im Bereich seiner rückwärtigen Kante wenigstens eine Ausnehmung zum Einlegen des Stiels oder Schaftes eines Besteckteils aufweist, der andere Klammerschenkel dagegen nicht.

Eine Klammer hat den Vorteil, dass ihre Klemmbacken leicht voneinander entfernt werden können - nämlich indem die rückwärtigen Arme der Klammerschenkel manuell zusammengepreßt werden. Wie bei doppelarmigen Hebeln wird dadurch der jeweils vordere Hebelarm in umgekehrter Richtung - also nach außen - geschwenkt. Damit kann eine solche Klammer auch bei Gefäßen mit einem dicken Rand oder mit einem geringen Krümmungsradius des Randes verwendet werden. Nach Loslassen der Klammer preßt die integrierte Feder die beiden Klammerschenkel selbsttätig an die innere bzw. an die äußere Oberfläche des betreffenden Gefäßrandabschnittes und fixiert dadurch den Besteckhalter selbst. Gemäß dem physikalischen Grundprinzip actio = reactio wirken auf beide Klammerschenkel beim Klemmvorgang die selben Kräfte ein, so dass es sich anbietet, beide Klammerschenkel - ggf. abgesehen von den Halte-Ausnehmungen in einem der beiden Schenkel - aufgrund statischer Gesichtspunkte symmetrisch zueinander zu gestalten. Dadurch kann evtl. auch der Herstellungsvorgang vereinfacht werden.

Wird die Backe eines Klammerschenkels an der Innenseite eines Gefäßes angeklemmt, so ragt der betreffende, rückwärtige Hebelarm etwa vertikal oder vorzugsweise leicht geneigt - bspw. zwischen 20° und 30° gegenüber der Vertikalen - nach oben. Beim Gebrauch befindet sich dort - etwa über dem Gefäßrand - dann die Einlegeausnehmung für ein Besteckteil. Wird das zu haltende Besteckteil In eine schlitzförmige Ausnehmung des Besteckhalters eingelegt; so verhindern die Seitenränder dieser Ausnehmung ein seitliches Wegrutschen des Besteckteils. Dabei ragt der Griff des Besteckteils nach außen und kann leicht ergriffen werden, während sich der Funktionsteil innerhalb des Gefäßes erstreckt, so dass bspw. herabtropfende Soße od. dgl. von dem Gefäß aufgefangen werden kann. Da sich die Einlegeschlitze etwa vertikal oberhalb des Klammerbackens befinden, wirken auf den Besteckhalter nur äußerst geringe oder gar keine Drehmomente ein und dieser kann daher nicht ver- oder abrutschen.

Es hat sich als günstig erwiesen, dass die Klammerschenkel ein Profil mit einem - abgesehen von den Einlegeschlitzen - etwa konstanten Querschnitt aufweisen. Eine solche Klammer ist universell verwendbar, sowohl für Gefäße mit etwa eckiger Grundfläche und abschnittsweise geradem Randverlauf als auch für runde Gefäße mit unterschiedlichstem Öffnungsdurchmesser.

Vorzugsweise bestehen die Klammerschenkel aus Metall. Dieses Material ist einerseits stabil genug für den erfindungsgemäßen Zweck und andererseits leicht zu reinigen und damit in hohem Maße hygienisch. Schließlich sind auch fast alle Besteckteile aus Metall gefertigt, so dass sich eine ästhetische Entsprechung ergibt. Besonders bevorzugt die Erfindung Edelstahl, weil dieses Material auch nach häufigem Gebrauch und jeweils folgendem Abspülen weder rostet noch sonstwie oxidiert.

Der Herstellungsaufwand eines erfindungsgemäßen Besteckhalters läßt sich auf ein Minimum reduzieren, indem die Klammerschenkel aus einem Metallblech gefertigt sind, insbesondere durch Ausstanzen und ggf. Biegen. Diese Methode bietet sich aufgrund der überwiegend flächigen Gestalt der Klammerschenkel an. Die Klammerschenkel können völlig eben sein, so dass ein Biegevorgang entfällt; jedoch werden die Klammerschenkel in vielen Fällen - u.a. auch aus ästhetischen Gesichtspunkten - einem zumindest bereichsweise gewölbten Verlauf folgen, was bspw. mit einem Biegeschritt erreicht werden kann.

Von großem Vorteil ist, dass die vorderen Kanten der Klemmbacken in von äußeren Kräften freiem Zustand aneinander oder nahe beieinander liegen. Solchenfalls kann der erfindungsgemäße Besteckhalter bei Bedarf auch an Gefäßen mit hauchdünnen Wänden sicher fixiert werden, bspw. an Aluminiumschalen mit etwa eckigem Grundriß.

Ein etwa linienförmiger Berührungsbereich oder Bereich minimalen Abstandes zwischen den beiden aneinander oder nahe beieinander liegenden Klemmbacken ist am besten in der Lage, sich an die unterschiedlichsten Gefäßformen anzupassen - unabhängig davon, ob dieselben in dem betreffenden Abschnitt des Gefäßrandes etwa eben sind oder einem etwa zylindrischen, kegelstumpfförmigen oder gar kugelförmigen Verlauf folgen.

Die Erfindung empfiehlt, dass die rückwärtigen Hebelarme der beiden Klammerschenkel in von äußeren Kräften freiem Zustand zu ihren freien Enden hin voneinander divergieren. Der dortige Abstand erlaubt bei manuellem Zusammendrücken einen großen Schwenkwinkel um die von dem elastischen Element gebildeten Lagerpunkt, woraus ein ebenso großer Schwenkwinkel der Klammerbacken resultiert. Dadurch können auch sehr dicke oder stark gekrümmte Gefäßränder übergriffen werden. In kräftefreiem Zustand kann sich ein Divergenz- bzw. Öffnungswinkel zwischen 30° und 60° einstellen, bspw. zwischen 40° und 50°.

Die Endbereiche der rückwärtigen Hebelarme der Klammerschenkel können zur Versteifung nach innen umgebogen sein, vorzugsweise um die spätere freie rückwärtige Kante. Vorzugsweise, aber nicht unbedingt, handelt es sich hierbei um einen Biegewinkel von 180°, mit der Folge, dass an der Innenseite keine den Schwenkwinkel beeinträchtigenden Fahnen verbleiben.

Wenigstens eine Ausnehmung zum Einlegen des Stiels oder Schaftes eines Besteckteils sollte zur freien Kante des rückwärtigen Hebelarms des betreffenden Klammerschenkels hin offen sein, damit ein darin aufgenommenes Besteckteil bequem entnommen werden kann.

Indem wenigstens eine Seitenkante mindestens einer Ausnehmung zum Einlegen des Stiels oder Schaftes eines Besteckteils einen in der Richtung vom Grund der Ausnehmung zu ihrer Öffnung hin zur gegenüberliegenden Seitenkante konvergierenden Abschnitt aufweist, ergibt sich eine Hinterschneidung, wobei die Breite der Einlegeausnehmung an ihrem Grund kleiner ist als in einem darüber liegenden Abschnitt. Die vorspringenden Bereiche dieser Hinterschneidung dienen dazu, den Griff oder Schaft eines eingelegten Besteckteils zu übergreifen, wenn dieses bspw. nach vorne rutscht, so dass der verdickte Griff in den Bereich des Besteckhalters gelangt, oder wenn das Besteckteil um seine Längsachse gedreht wird, so dass die breitere Seite des Schaftes oder Griffs etwa horizontal ausgerichtet wird. Ein solchermaßen übergriffenes Besteckteil wird sehr fest gehalten.

lm Rahmen einer bevorzugten Ausführungsform kann vorgesehen sein, dass wenigstens ein Abschnitt einer Seitenkante kontinuierlich, d.h. stetig, zu der gegenüberliegenden Seitenkante der Ausnehmung konvergiert. Bspw könnte der Grund der Einlegeausnehmung zusammen mit den angrenzenden, konvergierenden Abschnitten einer (gemeinsamen) Kreislinie folgen, die sich über einen Zentrumswinkel von mehr als 180° erstreckt. Andererseits ist es auch möglich, dass wenigstens ein Abschnitt einer Seitenkante stufig, d.h. unstetig, zu der gegenüberliegenden Seitenkante der Ausnehmung vorspringt.

Weitere Vorteile ergeben sich dadurch, dass das elastische Element zwischen den beiden Klammerschenkeln einen zu deren mittlerer Symmetrieebene bereichsweise etwa lotrecht verlaufenden Abschnitt aufweist. Das elastische Element kann bei einer bevorzugten Konstruktion zusätzlich zu der Federung eine Art Lagerfunktion übernehmen, d.h., es bestimmt den Drehpunkt oder die Drehpunkte, um welche(n) die beiden Klammerschenkel beim manuellen Öffnen schwenken. Diese ggf. gemeinsamen Drehpunkte werden vorgegeben durch den lotrecht zu der Symmetrieebene verlaufenden Federabschnitt.

Aufgrund verschiedener Gesichtspunkte sollte auch das elastische Element aus Metall, insbesondere aus Federstahl, bestehen, obwohl auch andere Materialien, insbesondere Kunststoffe, in Betracht kommen. Denn (korrosionsfreies) Metall ist lange beständig, stabil, ästhetisch und kann leicht gereinigt werden, insbesondere auch in einer Geschirrspülmaschine.

Die Verwendung einer Blattfeder als elastisches Element hat den Vorteil einer geschlossenen Oberfläche ohne Spalte od. dgl. wie bspw. bei Spiralfedern und ist deshalb in besonderem Maße hygienisch.

Um die Elastizität des Federelementes zu erhöhen, kann dieses mit einer oder mehreren Durchbrechungen versehen sein und/oder querschnittlich geschwächte Bereiche aufweisen. Vorzugsweise ist ein Längsschlitz eingestanzt, der zu jeder Stirnseite der Klammer einen gewissen Abstand von bspw. jeweils 2 mm bis 8 mm aufweist. Die beiden verbleibenden Stege im Bereich der beiden Klammerstirnseiten stellen demnach die einzige Verbindung zwischen den beiden Klammerschenkeln dar und bestimmen damit die Federelastizität der Klammer.

Bevorzugt weist das elastische Element einen Verlauf mit einem etwa U-förmigen Querschnitt auf. Dabei kann jeder der beiden Schenkel mit einem Klammerschenkel verbunden oder integriert sein, während der Mittelsteg die Federcharakteristik erzeugt. Außerdem wird dadurch im Bereich dieses Feder-Mittelstegs ein stabiler Abstand zwischen den beiden Kiammerschenkeln geschaffen, welcher die Relativverschwenkung dieser Teile ermöglicht und auch bei manuellem Druck quer zur Klammerlängsachse aufrechterhalten wird.

Mit großem Vorteil konvergieren die freien Enden der U-Schenket des Federquerschnitts zueinander bspw. unter dem selben Öffnungswinkel wie die rückwärtigen Klammerschenkel, so dass diese U-Schenkel bereichsweise parallel zu den Klammerschenkeln verlaufen. Die U-Schenkel gehen vorzugsweise tangential in den Mittelbereich von etwa kreisförmigem Querschnitt über, und damit ohne jeden Knick.

Andererseits kann auch vorgesehen sein, dass im Bereich des Übergangs von je einem Schenkel in den Mittelsteg des elastischen Elements je eine Biegekante mit einem kleinen Biegeradius von weniger als 5 mm, vorzugsweise von weniger als 3 mm, insbesondere von weniger als 2 mm, vorgesehen ist. Derart kleine Biegeradien ermöglichen den Federschenkeln einen etwa parallelen Verlauf zu dem jeweiligen Klammerschenkel und können die auf diesen einwirkenden Kräfte damit vollflächig aufnehmen.

Sollte der Steg zwischen den beiden Biegekanten einen nahezu gerade verlaufenden Querschnitt aufweisen, so wird die Feder durch den Druck bei einer manuellen Betätigung der Klammer vor allem in Längsrichtung des etwa gerade verlaufenden Mittelstegs belastet, so dass auch nach einem langen Zeitraum keine bleibenden Verformungen auftreten. Der erfindungsgemäße Besteckhalter bewegt sich daher stets innerhalb des elastischen Verformungsbereichs, und die Federkraft bleibt dementsprechend unverändert hoch.

Es bietet sich an, die Enden der Seitenschenkel des elastischen Elements an oder mit den einander zugewandten Innenseiten der beiden Klammerschenkel festzulegen, bzw. mit diesen zu verbinden, oder mit diesen zu integrieren. Die Innenseiten sind durch den jeweils gegenüberliegenden Klammerschenkel bzw. durch den umgriffenen Öffnungsrand des betreffenden Gefäßes weitgehend verdeckt und damit den Blicken der Tafelgäste weitgehend entzogen. An dieser Stelle treten die Federschenkel daher optisch kaum hervor.

Die Erfindung läßt sich dahingehend weiterbilden, dass die Enden der Seitenschenkel des elastischen Elements von je einem oder mehreren über die Innenseite umgebogenen Abschnitt(en) der Klammerbacken umgriffen und gehalten sind. Ein solcher Formschluß ist in höchstem Maße dauerhaft und kann mit einem einzigen, schnellen Arbeitsschritt des Biegens hergestellt werden. Darüber hinaus können bspw. in der Innenseite eines oder beider Klammerschenkel Vertiefungen vorgesehen sein, in welche ein dazu etwa komplementärer Fortsatz an einem Federschenkel eingreifen, insbesondere einrasten kann, oder umgekehrt. Dabei kann ein Fortsatz bspw. durch eine Ausstanzung einer U-förmigen Linie erfolgen, woraufhin der Bereich innerhalb des U nach außen gebogen wird. Wenn die freie Kante einer solchen U-förmigen Lasche dem Mittelsteg der Feder zugewandt ist, kann sie nach Einschieben einer solchermaßen präparierten Feder in eine durch eine bereits erfolgte Umbiegung eines vorderen Klammerschenkels gebildete Tasche nach außen in eine dort vorgesehene Ausnehmung, insbesondere Vertiefung, federn und sich dort verhaken, um ein versehentliches Lösen der Klammer auszuschließen.

Eine Biegekante eines umgebogenen Abschnitts kann sich an dem Berührungsbereich der Klammerbacken in kräftefreiem Zustand befinden und erzeugt dort dadurch eine konvex gewölbte Oberfläche ohne scharfe Kanten, so dass auch Geschirrgefäße aus einem weicheren Material, bspw. Kunststoff, nicht beschädigt werden können.

Das elastische Element, insbesondere dessen Seitenschenkel, können mit den beiden getrennten Klammerschenkeln verbunden sein, bspw. mittels Klebstoff oder durch Löten oder Schweißen. Diese Maßnahme trägt einerseits zu einer besonders haltbaren Verbindung zwischen diesen Teilen bei und schließt andererseits noch vorhandene Spalte, so dass keine schlecht zu reinigende Stellen verbleiben.

Schließlich entspricht es der Lehre der Erfindung, dass der gesamte Besteckhalter aus einem einzigen Teil hergestellt ist, vorzugsweise aus einem Blech, vorzugsweise Metallblech, insbesondere korrosionsfreiem Federstahl. Die Herstellung erfolgt vorzugsweise durch Ausstanzen und Biegen. Solchenfalls ergibt sich etwa ein Querschnitt in Form eines W oder \n/, mit einem großen Biegeradius von bspw. mehr als 2 mm in der Mitte, vorzugsweise mehr als 3 mm, insbesondere mehr als 4 mm. Andererseits ist der Biegeradius des mittleren Abschnitts bspw. kleiner als 10 mm, vorzugsweise kleiner als 8 mm, insbesondere kleiner als 6 mm. Der Mittelteil verfügt dank einer eingestanzten Ausnehmung über eine erhöhte Elastizität. Die Biegeradien zwischen diesem elastischen Mittelteil und den seitlichen Klammerschenkeln liegt bspw. in der Größenordnung von weniger als 2 mm, insbesondere weniger als 1,5 mm. Diese enger als das Mittelteil umgebogenen Bereiche dienen vorzugsweise gleichzeitig als Klammerbacken, welche einen Topfrand von beiden Seiten her umgreifen,

Weitere Merkmale, Eigenschaften, Vorteile und Wirkungen auf der Basis der Erfindung ergeben sich aus der folgenden Beschreibung bevorzugter Ausführungsformen der Erfindung sowie anhand der Zeichnung. Hierbei zeigt:
- Fig. 1: eine erste Ausführungsform der Erfindung in einer perspektivischen Ansicht;
- Fig. 2: den Besteckhalter aus Fig. 1 aus einer anderen Perspektive;
- Fig. 3: eine Seitenansicht des Besteckhalters aus den Fig. 1 und 2;
- Fig. 4: einen Ausschnitt aus Fig. 3 in einer größeren Darstellung;
- Fig. 5: das elastische Element für den Besteckhalter aus einer der vorangehenden Figuren;
- Fig. 6: eine Seitenansicht auf das elastische Element aus Fig. 5;
- Fig. 7: den Besteckhalter nach den Fig. 1 bis 4 in an dem Rand eines Gefäßes festgeklemmtem Zustand beim Halten eines Soßenschöpfers;
- Fig. 8: denselben Besteckhalter in der Funktion als Messerbänkchen
- Fig. 9: eben diesen Besteckhalter in seiner Funktion als Tischkartenhalter;
- Fig. 10: eine abgewandelte Ausführungsform der Erfindung in einer perspektivischen Ansicht;
- Fig. 11: eine Ansicht des Besteckhalters aus Fig. 10 von seiner Flachseite her gesehen;
- Fig. 12: eine Ansicht des Besteckhalters aus Fig. 10 von seiner Stirnseite her gesehen;

- Fig. 13: eine perspektivische Darstellung des bei dieser Ausführungsform verwendeten Federelements; sowie
- Fig. 14: eine Ansicht auf die Stirnseite des Federelements aus Fig. 13.

Der Besteckhalter 1 hat die Form einer Klammer mit zwei voneinander getrennten Klammerschenkeln 2,3, die nur über ein Federelement 4 miteinander verbunden sind.

Beide Klammerschenkel 2,3 sind aus je einem Zuschnitt aus Metall, bspw. Edelstahl, Aluminium, verchromtem Kupfer, etc., hergestellt. Diese Zuschnitte haben einen rechteckigen Umriß mit einer überwiegend länglichen Erstreckung und mit abgerundeten Ecken. Bei der Weiterverarbeitung werden diese Zuschnitte mehrmals um Biegekanten gebogen, welche alle parallel zueinander sowie auch parallel zu der Schmalseite des betreffenden Zuschnitts verlaufen. Dadurch erhalten die fertigen Klammerschenkel 2,3 je eine profilförmige Gestalt, wobei die Längsachse dieser Profile quer zu der Längsachse des betreffenden Klammerschenkels 2,3 verläuft.

Jeder Schnitt durch einen Klammerschenkel 2,3 quer zu der Längsachse des betreffenden Profils hat eine etwa L-förmige Gestalt, wobei jedoch der Winkel zwischen den beiden Armen 5,6 stumpf ist, bspw. etwa 135° beträgt. Ein Arm 5 ist bedeutend kürzer als der andere Arm 6. Der kürzere Arm 5 weist die eigentliche Klammerbacke 7 auf, der andere Arm 6 dient der Verbindung mit dem Federelement 4 sowie der manuellen Betätigung.

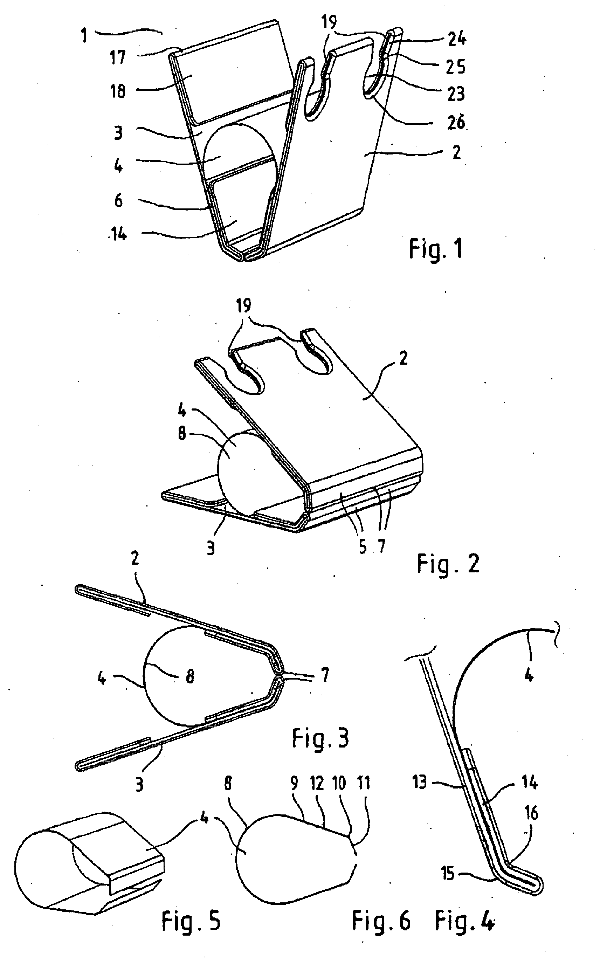

Wie die Fig. 5 und 6 erkennen lassen, ist das Federelement 4 als Blattfeder ausgebildet und besteht vorzugsweise aus einem rechteckigen Zuschnitt aus Federstahl, der in eine grundsätzlich etwa U-förmige Gestalt gebogen ist. An einen Mittelsteg 8 mit einer mäßigen Krümmung schließt sich an beiden Seiten je ein Schenkel 9 an, der - entsprechend dem L-förmigen Profil eines Klammerschenkels 2,3 - ebenfalls durch eine in Profillängsrichtung verlaufende Biegekante 10 in einen vorderen, kurzen Arm 11 und einen rückwärtigen, deutlich längeren Arm 12 unterteilt ist, welche bspw. einen Winkel von 135° miteinander einschließen. Die kurzen Arme 11 am freien Ende der Federschenkel 9 sind aufeinander zu umgebogen, konvergieren also zu ihren freien Enden hin. Die Erstreckung des Federelements 4 in Längsrichtung ihres Profils bzw. die Breite ihres Zuschnitts entspricht der Breite des Zuschnitts für einen der beiden Klammerschenkel 2,3.

Den Fig. 3 und 4 ist zu entnehmen, dass je ein Zuschnitt für einen Klammerschenkel 2,3 im Bereich von dessen Klammerbacke 7 um je einen Schenkel 9 des Federelements 4 herum gebogen ist, wodurch eine dem anderen Federschenkel 9 abgewandte Außenlage 13 und eine jenem anderen Federschenkel 9 zugewandte Innenlage 14 entstehen, welche an der eigentlichen Klammerbacke 7 ineinander übergehen. Bei diesem Biegevorgang wird die Biegekante 10 des Federelements 4 von dem gebogenen Klammerschenkel 2,3 in Form einer Biegekante 15 in der Außenlage 13 und einer Biegekante 16 in der Innenlage 14 nachvollzogen. Da die Innen- und Außenlage 14, 13 von beiden Seiten jeweils vollflächig an einem Schenkel 9 des Federelements 4 anliegen, wird das Federelement 4 fest eingeklemmt und kann nicht mehr herausgezogen werden. Da die Länge eines Schenkels 9 des Federelementes 4 deutlich kürzer ist als ein Klammerschenkel 2,3, so befindet sich der Mittelsteg 8 des Federelements 4 etwa in einem mittleren Bereich eines Klammerschenkels 2,3.

Da die Schenkel 9 des Federelements 4 aufgrund der dem Mittelsteg 8 bei der Herstellung eingeprägten Federspannung bestrebt sind, sich einander anzunähern, werden die Klammerbacken 7 der damit verbundenen Klammerschenkel 2,3 aneinander gepreßt.

Um diese Klammerbacken voneinander zu entfernen, müssen die rückwärtigen Arme 6 der beiden Klammerschenkel 2,3 jenseits des Mittelstegs 8 des Federelements 4 aneinandergepreßt werden. Damit durch die dabei ausgeübte Kraft keine Verformung der Klammerschenkel 2,3 eintritt, sind deren rückwärtige Arme 6 verstärkt, indem ein Teil des betreffenden Zuschnitts um die rückwärtige Kante 17 nach innen umgebogen ist, so dass auch hier zusätzlich zu der Außenlage 13 eine Innenlage 18 entsteht.

Die Zuschnitte für die beiden Klammerschenkel 2,3 weisen gleiche Umrisse auf und werden nach dem gleichen Schema gebogen; daher sind die solchermaßen hergestellten Klammerschenkel 2,3 hinsichtlich ihrer Grundgestalt identisch.

Ein Unterschied zwischen den beiden Klammerschenkeln 2,3 besteht jedoch darin, dass ein Klammerschenkel 2 im Bereich seiner rückwärtigen Kante 17 zwei Einlegeausnehmungen 19 für den Schaft 20 oder Griff je eines Besteckteils 21, 22 aufweist.

Jede der beiden identisch geformten Einlegeausnehmungen 19 hat einen schlitzförmigen Umriß mit zueinander symmetrischen Seitenkanten 23, 24. Die Symmetrielinie zwischen diesen Seitenkanten 23, 24 ist parallel zu der Klammerlängsachse.

Um den Schaft 20 eines Besteckteils 21, 22 sicher umfassen zu können, sind an den Seitenkanten 23, 24 zueinander konvergierende Erhebungen 25 vorgesehen, die ein in dem Bereich 26 unterhalb dieser Erhebungen 25 eingelegtes Besteckteil teilweise übergreifen. In dem vorliegenden Beispiel folgt die Berandungslinie dieses unteren Bereichs 26 einem Kreisbogen mit einem Zentrumswinkel von mehr als 180°, und dieser Verlauf reicht bis zu der Spitze der beiden Erhebungen 25. Von da an divergieren die Seitenkanten 23, 24 in Richtung zu der rückwärtigen Kante 17 voneinander, um das Einlegen eines Besteckteils zu erleichtern.

Die Berandungslinie der Einlegevertiefungen 19 ist - wie alle Kanten des erfindungsgemäßen Besteckhalters 1 - entgratet und angefast. Die Oberflächen der beiden Klammerschenkel 2,3 können beschichtet sein, bspw. verchromt. Die Beschichtung kann derart ausgebildet sein, dass bspw. durch vollständiges Eintauchen sämtliche verbleibenden Spalte geschlossen werden und sich eine leicht zu reinigende Oberfläche ergibt.

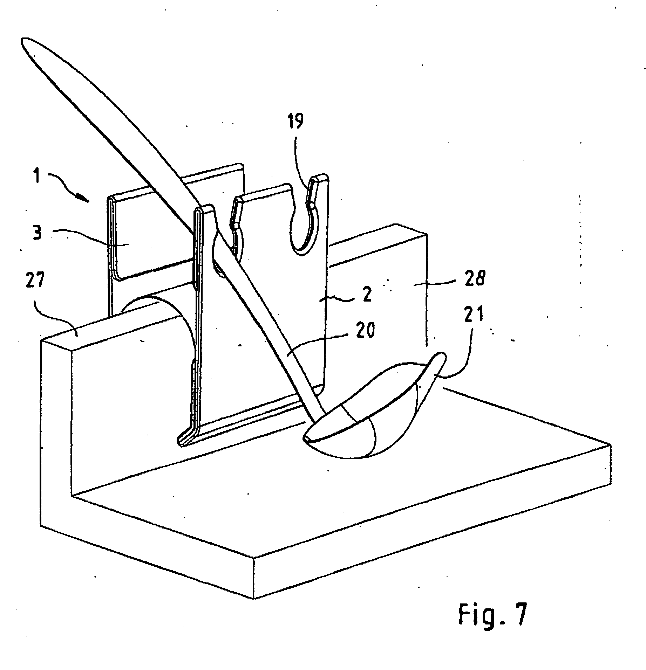

Wie Fig. 7 erkennen läßt, wird der erfindungsgemäße Besteckhalter 1 über den Rand 27 eines Gefäßes gesteckt, derart, dass seine Klemmbacken 7 zu beiden Seiten des Gefäßrandes 27 liegen und durch die Kraft der Feder 4 an diesen angepreßt werden. Dabei ist darauf zu achten, dass der Klammerschenkel 2 mit den Einlegevertiefungen 19 an der Innenseite 28 des Gefäßrandes 27 anliegt.

Nun kann ein Besteckteil, bspw. ein Schöpflöffel 21, mit seinem Schaft 20 in eine Vertiefung 19 eingelegt werden. Da der Schaft sich zum Griff hin querschnittlich erweitert, kann der Schöpflöffel nur so weit in das Gefäß hineinrutschen, bis sich sein Schaft 20 oder Griff in der Vertiefung 19 festklemmt.

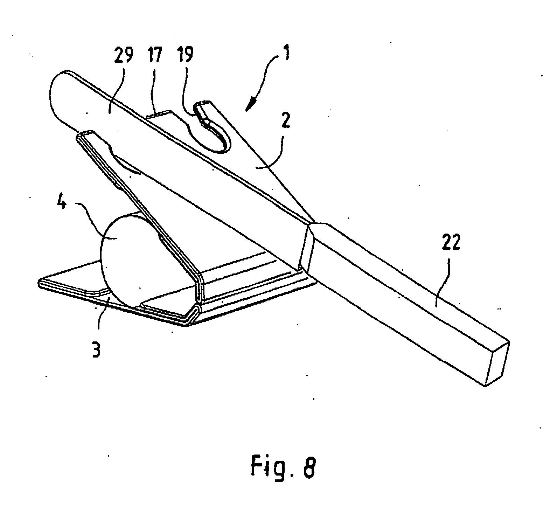

In Fig. 8 ist eine zweite Funktion des erfindungsgemäßen Besteckhalters 1 wiedergegeben, nämlich die eines Messerbänkchens. Hierzu wird der Klammerschenkel 3 ohne Ausnehmungen 19 flach auf den Tisch gelegt, derart, dass die rückwärtige Kante 17 des anderen Klammerschenkels 2 von der Tischkante weg weist. In dessen Vertiefungen 19 kann nun bspw. die Schneide 29 eines Messers 22 eingelegt werden, um die Tischdecke zu schützen.

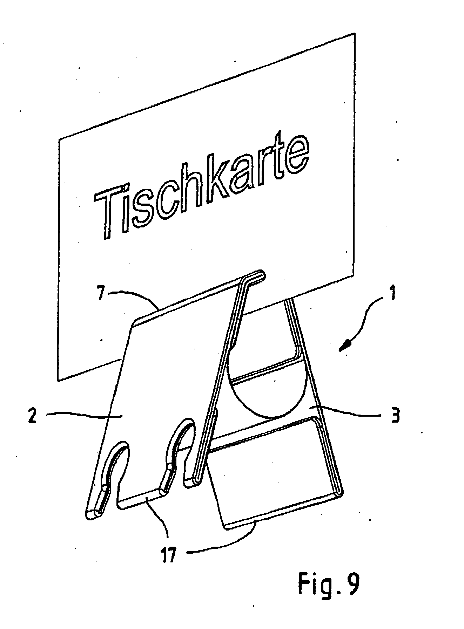

Eine weitere Funktion des erfindungsgemäßen Besteckhalters 1 ergibt sich aus Fig. 9: Auf die beiden rückwärtigen Kanten 17 gestellt, ragt dessen vorderer Bereich nach oben. Zwischen die dortigen, von dem Federelement aneinandergepreßten Klammerbacken 7 kann sodann bspw. eine Tischkarte, Speisekarte od. dgl. eingeklemmt und dadurch in einer aufrechten Position gehalten werden.

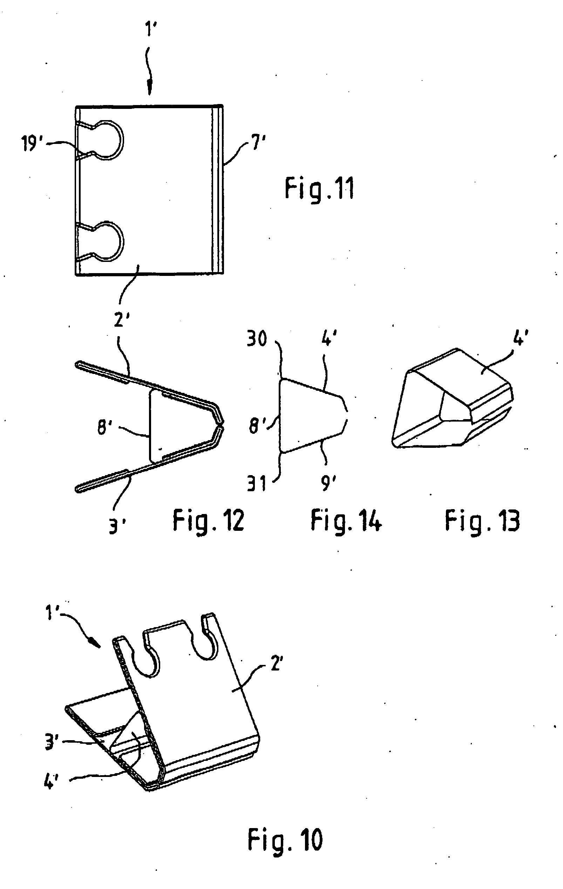

In den Fig. 10 bis 14 ist eine andere Ausführungsform 1' der Erfindung wiedergegeben. Diese unterscheidet sich von der zuvor beschriebenen nur dadurch, dass der Mittelsteg 8' des Federelements 4' nicht gleichförmig gebogen ist, sondern einen etwa ebenen Verlauf hat, der an Biegekanten 30, 31 mit einem geringen Biegeradius von bspw. nur 1 bis 3 mm in die Seitenschenkel 9' übergeht. Der Vorteil liegt darin, dass die beim manuellen Zusammendrücken der rückwärtigen Arme 6' der Klammerschenkel 2',3' einwirkende Druckkraft von dem Federelement 4' ohne jegliche bleibende Verformung abgestützt werden kann, weil diese kraft in Längsrichtung des Mittelstegs 8' der Blattfeder 4' wirkt.

## Patentansprüche

1. Vorrichtung (1;1') zum Halten von Besteck (21,22), wie bspw. Schöpflöffel, Fleischgabeln, Tranchiermesser, Spaghettizangen, etc., am Rand (27) von Geschirrgefäßen, wie bspw. Töpfen, Schüsseln, Schalen, Saucieren, Gläsern, etc., umfassend
a) eine den Rand (27) des Gefäßes mit zwei Backen (7) umgreifenden Klammer, deren beide Schenkel (2,3) am rückwärtigen Ende ihrer Backen (5,7) über ein elastisches Element (4) miteinander verbunden sind und jenseits des elastischen Elements (4) nach Art von doppelarmigen Hebeln getrennt voneinander verlängert sind (6), und
b) wenigstens eine schlitzförmige Ausnehmung (19) zum Einlegen des Stiels oder Schaftes (20) eines Besteckteils (21,22), die in dem rückwärtigen Hebelarm (6) eines Klammerschenkels angeordnet ist,
**dadurch gekennzeichnet, dass** die beiden Klammerschenkel (2,3)
c) symmetrisch zueinander sind, derart, dass die Vorrichtung wahlweise auch als Messerbänkchen, Tischkartenhalter und/oder Speisekartenhalter verwendbar ist,
d) sich jedoch **dadurch** unterscheiden, dass nur ein Klammerschenkel (2) im Bereich seiner rückwärtigen Kante (17) wenigstens eine Ausnehmung (19) zum Einlegen des Stiels oder Schaftes (20) eines Besteckteils (21,22) aufweist, der andere Klammerschenkel (3) dagegen nicht.

2. Vorrichtung nach Anspruch 1, **dadurch gekennzeichnet, dass** die Klammerschenkel (2,3) aus Metall bestehen.

3. Vorrichtung nach Anspruch 2, **dadurch gekennzeichnet, dass** die Klammerschenkel (2,3) aus einem Metallblech gebogen sind.

4. Vorrichtung nach einem der vorhergehenden Ansprüche, **dadurch gekennzeichnet, dass** die vorderen Kanten der Klemmbacken (5,7) in von äußeren Kräften freiem Zustand aneinander oder nahe beieinander liegen.

5. Vorrichtung nach einem der vorhergehenden Ansprüche, **dadurch gekennzeichnet, dass** die rückwärtigen Hebelarme (6) der beiden Klammerschenkel (2,3) in von äußeren Kräften freiem Zustand zu ihren freien Enden (17) hin voneinander divergieren.

6. Vorrichtung nach einem der vorhergehenden Ansprüche, **dadurch gekennzeichnet, dass** wenigstens eine Ausnehmung (19) zum Einlegen des Stiels oder Schaftes (20) eines Besteckteils (21,22) zur freien Kante (17) des rückwärtigen Hebelarms (6) des betreffenden Klammerschenkels (2) hin offen ist.

7. Vorrichtung nach einem der vorhergehenden Ansprüche, **dadurch gekennzeichnet, dass** wenigstens eine Seitenkante (23,24) mindestens einer Ausnehmung (19) zum Einlegen des Stiels oder Schaftes (20) eines Besteckteils (21,22) einen in der Richtung vom Grund (26) der Ausnehmung zu ihrer Öffnung hin zur gegenüberliegenden Seitenkante (23,24) konvergierenden Abschnitt (25) aufweist.

8. Vorrichtung nach einem der vorhergehenden Ansprüche, **dadurch gekennzeichnet, dass** das elastische Element (4) aus Metall, insbesondere aus Federstahl, besteht.

9. Vorrichtung nach einem der vorhergehenden Ansprüche, **dadurch gekennzeichnet, dass** das elastische Element (4) als Blattfeder ausgebildet ist.

10. Vorrichtung nach einem der vorhergehenden Ansprüche, **dadurch gekennzeichnet, dass** das elastische Element (4) einen Verlauf mit einem etwa U-förmigen Querschnitt aufweist.

11. Vorrichtung nach einem der vorhergehenden Ansprüche, **dadurch gekennzeichnet, dass** die Enden der Seitenschenkel (9) des elastischen Elements (4) zueinander konvergieren.

12. Vorrichtung nach einem der vorhergehenden Ansprüche, **dadurch gekennzeichnet, dass** die Enden der Seitenschenkel (9) des elastischen Elements (4) an den einander zugewandten Innenseiten der beiden Klammerschenkel (2,3) festgelegt oder mit den Klammerschenkeln (2,3) integriert sind.

## Claims

1. A device (1;1') for holding cutlery (21,22), for example ladles, meat forks, carving knives, spaghetti tongs, etc., on the rim (27) of tableware and kitchenware, for example pots, dishes, bowls, sauce boats, glasses and jars, etc., comprising
a) a clip which engages over the rim (27) of the vessel with two jaws (7) and the two limbs (2,3) of which are joined together at the rear end of their jaws (5,7) via an elastic element (4) and are extended separately from one another in the manner of two-armed levers (6) on the other side of the elastic element (4),
b) and at least one slot-like recess (19) to insert the handle or shank (20) of an item of cutlery (21,22), which is provided in the rear lever arm (6) of one clip limb,
**characterised in that** the two clip limbs (2,3)
c) are symmetrical to one another so that the device can alternatively be used also as a knife rest, a place card holder and/or menu holder,
d) however, are different **in that** only one clip limb (2) has in the vicinity of its rear edge (17) at least one recess (19) for the insertion of the handle or shank (20) of an item of cutlery (21,22) but the other clip limb (3) does not.

2. A device according to Claim 1, **characterised in that** the clip limbs (2, 3) consist of metal.

3. A device according to Claim 2, **characterised in that** the clip limbs (2,3) are bent from metal sheet.

4. A device according to any one of the preceding Claims, **characterised in that** in a condition free of external forces the front edges of the clip jaws (5,7) are situated against one another or close together.

5. A device according to any one of the preceding Claims, **characterised in that** in a condition free of external forces the rear lever arms (6) of the two clip limbs (2,3) diverge from one another towards their free ends (17).

6. A device according to any one of the preceding Claims, **characterised in that** at least one recess (19) for the insertion of the handle or shank (20) of an item of cutlery (21,22) is open towards the free edge (17) of the rear lever arm (6) of the respective clip limb (2).

7. A device according to any one of the preceding Claims, **characterised in that** at least one lateral edge (23,24) of at least one recess (19) for the insertion of the handle or shank (20) of an item of cutlery (21,22) has a portion (25) converging in the direction from the bottom (26) of the recess towards its opening to the opposite lateral edge (23,24).

8. A device according to any one of the preceding Claims, **characterised in that** the elastic element (4) consists of metal, in particular of spring steel.

9. A device according to any one of the preceding Claims, **characterised in that** the elastic element (4) is in the form of leaf spring.

10. A device according to any one of the preceding Claims, **characterised in that** the elastic element (4) extends in an approximately U-shaped cross-section.

11. A device according to any one of the preceding Claims, **characterised in that** the ends of the lateral limbs (9) of the elastic element (4) converge towards one another.

12. A device according to any one of the preceding Claims, **characterised in that** the ends of the lateral limbs (9) of the elastic element (4) are located on the mutually facing insides of the two clip limbs (2,3) or are integrated with the clip limbs (2,3).

## Revendications

1. Dispositif (1 ; 1') pour maintenir des couverts (21, 22), comme par exemple des louches, des fourchettes à viande, des couteaux à découper, des pinces à spaghettis, etc., sur le bord (27) de récipients de cuisine, comme par exemple, des pots, des jattes, des coupes, des saucières, des verres, etc., comprenant
a) une pince enserrant le bord (27) du récipient avec deux mors (7), pince dont les deux branches (2, 3) sont, à l'extrémité arrière de leurs mors (5, 7), reliées l'une à l'autre par l'intermédiaire d'un élément élastique (4) et sont, de l'autre côté de l'élément élastique (4), prolongées, séparément l'une de l'autre, à la manière de leviers à double bras (6), et
b) au moins un évidement (19) en forme d'encoche dans lequel le manche ou la tige (20) d'une pièce de couvert (21, 22) est destiné à être inséré, évidement qui est situé dans le bras de levier arrière (6) d'une branche de la pince,
**caractérisé en ce que** les deux branches (2,3) de la pince
c) sont symétriques l'une de l'autre, de telle manière que le dispositif soit également utilisable, au choix, comme repose-couteau, support de carton de réservation de table et/ou support de menu,
d) se différencient cependant par le fait qu'une seule branche (2) de la pince présente, dans la région de son arête arrière (17), au moins un évidement (19) dans lequel le manche ou la tige (20) d'une pièce de couvert (21, 22) est destiné à être inséré, alors qu'au contraire l'autre branche (3) de la pince n'en comporte pas.

2. Dispositif selon la revendication 1, **caractérisé en ce que** les branches (2, 3) de la pince sont réalisées en métal.

3. Dispositif selon la revendication 2, **caractérisé en ce que** les branches (2, 3) de la pince sont formées par cintrage d'un élément de tôle métallique.

4. Dispositif selon l'une des revendications précédentes, **caractérisé en ce que** les arêtes avant des mors de serrage (5, 7), dans l'état exempt de toute application de forces extérieures, sont placées l'une contre l'autre ou l'une à proximité de l'autre.

5. Dispositif selon l'une des revendications précédentes, **caractérisé en ce que** les bras de levier arrière (6) des deux branches (2, 3) de la pince, dans l'état exempt de toute application de forces extérieures, divergent l'un de l'autre vers leurs extrémités libres (17).

6. Dispositif selon l'une des revendications précédentes, **caractérisé en ce qu'**au moins un évidement (19) dans lequel le manche ou la tige (20) d'une pièce de couvert (21, 22) est destiné à être inséré, est ouvert du côté de l'arête libre (17) du bras de levier arrière (6) de la branche considérée (2) de la pince.

7. Dispositif selon l'une des revendications précédentes, **caractérisé en ce qu'**au moins une arête latérale (23, 24) d'au moins un évidement (19) dans lequel le manche ou la tige (20) d'une pièce de couvert (21, 22) est destiné à être inséré, présente un tronçon (25) convergeant vers l'arête latérale opposée (23, 24), dans la direction orientée du fond (26) de l'évidement vers son ouverture.

8. Dispositif selon l'une des revendications précédentes, **caractérisé en ce que** l'élément élastique (4) est réalisé en un métal, en particulier en un acier à ressort.

9. Dispositif selon l'une des revendications précédentes, **caractérisé en ce que** l'élément élastique (4) est conçu sous forme d'une lame de ressort.

10. Dispositif selon l'une des revendications précédentes,
**caractérisé en ce que** l'élément élastique (4) présente une allure le dotant d'une section transversale à peu près en forme de U.

11. Dispositif selon l'une des revendications précédentes, **caractérisé en ce que** les extrémités des branches latérales (9) de l'élément élastique (4) convergent l'une vers l'autre.

12. Dispositif selon l'une des revendications précédentes, **caractérisé en ce que** les extrémités des branches latérales (9) de l'élément élastique (4) sont fixées aux faces intérieures, tournées l'une vers l'autre, des deux branches (2, 3) de la pince ou sont intégrées aux branches (2, 3) de la pince.
